# EUROPEAN PATENT SPECIFICATION

(11) **EP 3 184 685 B1**
(45) Date of publication and mention of the grant of the patent: **21.11.2018**
(21) Application number: 14900002.8
(22) Date of filing: 30.09.2014
(51) Int. Cl.: D06F 17/10, D06F 37/14

(54) **WASHING MACHINE AND WASHING METHOD**
WASCHMASCHINE UND WASCHVERFAHREN
MACHINE À LAVER ET PROCÉDÉ DE LAVAGE

(30) Priority: 19.08.2014 CN 201410407782
(43) Date of publication of application: 28.06.2017
(73) Proprietor: Qingdao Haier Washing Machine Co., Ltd., Shandong 266101 (CN)
(72) Inventor: LV, Peishi, Qingdao Shandong 266101 (CN); YANG, Lin, Qingdao Shandong 266101 (CN); TIAN, Yun, Qingdao Shandong 266101 (CN); XU, Wenting, Qingdao Shandong 266101 (CN); LI, Feng, Qingdao Shandong 266101 (CN); ZHANG, Qi, Qingdao Shandong 266101 (CN)
(74) Representative: Ziebig, Marlene
(86) International application number: PCT/CN2014/087884
(87) International publication number: WO 2016/026198

(56) References cited:
- CN-A- 1 280 221
- CN-A- 1 280 221
- CN-A- 102 587 072
- CN-U- 202 500 016
- CN-Y- 2 509 205
- CN-Y- 2 658 193
- CN-Y- 2 658 193
- CN-Y- 2 707 796
- CN-Y- 2 707 796
- JP-A- H11 216 292
- JP-A- H11 216 292

## Description

### FIELD OF THE INVENTION

The present disclosure relates to a washing machine, and more particularly, to a washing machine and a washing method for saving washing water, uniformly turning, laundry unentangled.

### BACKGROUND OF THE INVENTION

At present, the washing method of a pulsator washing machine is to flip laundry through a special water flow which is formed by the rotation of the pulsator or the rotation of both pulsator and inner tub together. And in the process the water flow exerts force on the laundry so that through its own friction, the pulsator and the inner tub wall friction, repeatedly washing to achieve the purpose of cleaning. The shape of pulsator in the pulsator washing machine is ever-changing such as dish-shaped pulsator, rod-shaped pulsator, cup-shaped pulsator, etc. But no matter how the shape of the pulsator changes, the ultimate goal, without exception, is to improve the degree of washing and reduce clothing winding. However, the high degree of cleanliness and low winding rate are contradictory, often the degree of cleanliness improves and the winding is more severe, or the winding rate decreases and the degree of cleanliness decreases as well. The existing pulsator washing machine consumes a lot of water, has a long washing time, uses a big amount of washing detergent, and the laundry is easily getting winded which causes laundry unevenly washing and easy to deformation. The laundry is washed by the impact force of the water generated by the centrifugal force generated by the rotation of the inner tub, and the laundry is usually carried out as a whole to complete the washing process. Although the water flow also plays the effect of erosion, it is not enough loose the winded laundry, the whole laundry is wound together as a whole mass.

In order to improve the degree of washing, a high angular velocity and rotational speed of the pulsator are needed during washing. The water flow generated by the centrifugal force drives the laundry to move along a direction, but that will eventually lead laundry winded together, so that the laundry will be torn, especially high-end clothing, more vulnerable to damage. In addition, only depending on single water flow in the washing process, the movement form is simple and fixed and the washing efficiency in the inner tub is low, more washing is required to complete the washing effect on the entire laundry.

In addition, when this kind of washing machine operates, the pulsator rotates or swings which generates a circular flow. Since the movement of the laundry in the tub depends on fluid motion or hydrodynamic forces, it is also necessary to fill the automatic washing machine with a pulsator at the bottom with washing water in order to achieve the desired toroidal rollover mode, wherein the height of washing water added to the tub must be sufficient to completely immerse the fabric loaded into the washing tub, which would require a large amount of water to be consumed. In addition, due to the large amount of water, in order to achieve sufficient detergent concentration, it is necessary to increase the amount of detergent which the washing costs are high, and the water resources also cause a certain degree of pollution.

Ordinary pulsator-type washing machine is driven by the pulsator clockwise and counterclockwise alternating movement. Through the friction generated between laundries, laundry and water, it is to improve the cleaning effect. Because the use of more powerful water, the drawbacks are winding with relatively large, washing uneven, and water consumption. Double power washing machine adopts pulsator and inner tub reverse rotation, increases the friction between laundries, laundry and water to enhance the cleaning effect. However, due to the shape of the pulsator, the washing water flow is similar to the one of the ordinary pulsator type washing machine, with strong positive and negative alternating movement. Although the cleaning effect is improved, the winding problem is still limited. Ordinary double power pulsator, commonly used large round pulsator, this pulsator is similar to a basin, the middle concave. If it wants to flip the laundry, a strong water flow is needed to drive the laundry to flip through water and laundries are easy to be wrapped together. The number of laundries flipped up and down is small during the whole washing process.

A Chinese patent application No. 200620101772.5 discloses a washing machine pulsator, comprises a circular chassis and a water stirring rib arranged on the chassis. Wherein, the chassis is high in circumference and low in center, so as to form a concave circular arc spherical surface. The water stirring rib includes a central water stirring rib, a main water stirring rib and an auxiliary water stirring rib. The central water stirring rib is located at the center of the chassis; the main water stirring rib is radially arranged on the chassis, and the two sides thereof are provided with outward inclined inclines. The auxiliary water stirring rib is also set in the radial on the chassis, and its sides are also equipped with outward inclined bevel, and the main water stirring rib and auxiliary water stirring rib are spacing settings. The height of the central water stirring rib is greater than the height of the main water stirring rib, and the height of the main water stirring rib is greater than the height of the auxiliary water stirring rib.

CN 1 280 221 A describes a method and apparatus for washing cloth items in an automatic washer is provided, wherein the automatic washer includes a wash basket defining a wash chamber and an impeller located within the bottom of the wash chamber.

CN 2 707 796 Y shows an imitating rubbing type washing machine having a washing barrel and impellers which do discontinuous clockwise and anticlockwise rotation.

CN 2 658 193 Y discloses a washing dewatering drum of water-saving washer which can clean clothes and drain.

JP H11 216292 A shows another known washing and drying machine.

In view of the foregoing, the present disclosure is proposed.

### SUMMARY OF THE INVENTION

An object of the present disclosure is to provide a washing machine and a washing method for saving washing water, increasing the frequency of laundry turning up and down, increasing the clean ratio and cleaning uniformity, reducing the washing time, and reducing the entanglement between laundries, in order to overcome the shortcomings of the prior art.

In order to achieve the object, a first aspect of the present invention refers to a washing machine comprising a washing tub and a pulsator at a bottom of the washing tub, the pulsator including a pulsator disk and a plurality of stirring blades arranged on a surface of the pulsator disk, wherein the pulsator disk is a disk-like structure with a bulge at center, each stirring blade extends from the center of the pulsator disk to an edge, and a plurality of strip-shaped ribs are vertically arranged on an inner wall of the washing tub, wherein a distance between an outside edge of the pulsator and a bottom edge of the inner wall of the washing tub, and a tub bottom outer ring is arranged between the outside edge of the pulsator and the bottom edge of the inner wall of the washing tub. A junction of the tub bottom outer ring and the inner wall of the washing tub is circumferentially provided with a plurality of bumps projecting from the tub bottom outer ring and the inner wall of the washing tub. It can promote the overturning of the laundry inside the washing tub.

According to the invention, a ratio of a width of the tub bottom outer ring to a radius of the pulsator is in a range from 1: 5 to 1: 3, preferably 1:4, a number of the bumps is in a range from 3 to 15, preferably a range from 6 to 12, and a ratio of a height of the bumps to a height of the pulsator is in range from 1: 3 to 1: 2, preferably 1:2.4, and further,
a number of the strip-shaped ribs is in a range from 3 to 6, a plurality of strip-like ribs are uniformly provided on the inner wall of the washing tub, and a ratio of a protruding height of the strip-shaped ribs to the width of the tub bottom outer ring is in a range from 1: 2 to 1: 1, preferably 1:1.5, and further,
a height of an upper surface of the stirring blades that extends from the center to the edge of the pulsator disk changes as: ascending from the center of the pulsator disk to a highest position and then descending, to form an inclined ramp transition with the edge of the pulsator disk, and further,
the stirring blade comprises at least two ribs which are respectively inclined toward both sides in an extension direction of the stirring blades to form a twisted stirring blade structure, the stirring blade in the extension direction is a straight line or a curve, the stirring blade in the extension direction being a curve means that curvatures or slopes of projections of at least two ribs of the stirring blades in the pulsator disk surface are different, or the stirring blades are at least composed of a combination of an arc-shaped rib and a straight line rib, and further,
the stirring blade comprises a first segment rib adjacent the center of the pulsator disk and a second segment rib adjacent the edge of the pulsator disk, the first segment rib and second segment rib are respectively inclined to surfaces of the pulsator disk on different sides in the extension direction of the stirring blades, an inclination of the first segment rib and second segment rib to a vertical plane of the surface of the pulsator disk with respect to a line where the stirring blades and the surface of the pulsator disk surface intersect is less than or equal to 35 °, two side surfaces of the stirring blades and the surface of the pulsator disk are smooth transition, preferably, projections of the first segment rib and the second segment rib on the surface of the pulsator disk are two-segment arcs, centers of the arcs are respectively located on both sides of the stirring blades, and further,
a center angle between two ends of the stirring blades is in a range from 15 ° to 90 °, preferably the center angle between the two ends of the stirring blades is in range from 30 ° to 60 °, and further,
a plurality of decorative areas is arranged on the surface of the pulsator disk between the two stirring blades, and the decorative area is provided with water permeable holes, the decorative area is shallow grooves with different size and water-trail-shaped, a depth is in a range from 1 to 5mm, the shallow groove is provided with at least one water permeable hole.

A second aspect of the invention refers to a washing method of a washing machine, the washing machine comprising: a washing tub and a pulsator at a bottom of the washing tub, the pulsator including a pulsator disk and a plurality of stirring blades being arranged on a surface of the pulsator disk, wherein the pulsator disk is a disk-like structure with a bulge at center, each stirring blade extends from the center of the pulsator disk to an edge, and a plurality of strip-shaped ribs are vertically arranged on an inner wall of the washing tub, wherein there is a distance between an outside edge of the pulsator and a bottom edge of the inner wall of the washing tub, a tub bottom outer ring is arranged between the outside edge of the pulsator and the bottom edge of the inner wall of the washing tub, and a junction of the tub bottom outer ring and the inner wall of the washing tub is circumferentially provided with a plurality of bumps projecting from the tub bottom outer ring and the inner wall of the washing tub.

According to the invention, during washing process, laundry is loaded into the washing tub and detecting loads, water is flooded in to a water level corresponding to the loads, so that a weight of the wet laundry falls on the pulsator, then the laundries in the washing tub as a whole being driven to rotate reversely by a plurality of strip-shaped ribs on the inner wall of the washing tub and a plurality of bumps on the tub bottom outer ring rotating relative to the pulsator in a small angle, the pulsator pushing the laundries in the center of the pulsator up through the slope of the stirring blades and a pulsator center part, and pushing the laundries on the bottom and at a periphery of the pulsator to the center, it achieves the laundry in the tub doing a constantly rapid floral-like overturn from the center to the periphery, and controlling the pulsator to rotate as a fixed rotation stop ratio to wash or using different rotation stop ratios corresponding to different load rates to wash.

In the following, possible design options of the washing machine used in the method are described.

A ratio of a width of the tub bottom outer ring to a radius of the pulsator is in a range from 1: 5 to 1: 3, preferably 1:4, a number of the bumps is in a range from 3 to 15, preferably a range from 6 to 12, and a ratio of a height of the bumps to a height of the pulsator is in range from 1: 3 to 1: 2, preferably 1:2.4.

Further, a number of the strip-shaped ribs is in a range from 3 to 6, a plurality of strip-like ribs are uniformly provided on the inner wall of the washing tub, and a ratio of a protruding height of the strip-shaped ribs to the width of the tub bottom outer ring is in a range from 1: 2 to 1: 1, preferably 1:1.5.

Further, a height of an upper surface of the stirring blades that extends from the center to the edge of the pulsator disk changes as: ascending from the center of the pulsator disk to a highest position and then descending, to form an inclined ramp transition with the edge of the pulsator disk.

Further, the stirring blade comprises at least two ribs which are respectively inclined toward both sides in an extension direction of the stirring blades to form a twisted stirring blade structure, the stirring blade in the extension direction is a straight line or a curve, the stirring blade in the extension direction being a curve means that curvatures or slopes of projections of at least two ribs of the stirring blades in the pulsator disk surface are different, or the stirring blades are at least composed of a combination of an arc-shaped rib and a straight line rib.

Further, the stirring blade comprises a first segment rib adjacent the center of the pulsator disk and a second segment rib adjacent the edge of the pulsator disk, the first segment rib and second segment rib are respectively inclined to surfaces of the pulsator disk on different sides in the extension direction of the stirring blades, an inclination of the first segment rib and second segment rib to a vertical plane of the surface of the pulsator disk with respect to a line where the stirring blades and the surface of the pulsator disk surface intersect is less than or equal to 35 °, two side surfaces of the stirring blades and the surface of the pulsator disk are smooth transition, preferably, projections of the first segment rib and the second segment rib on the surface of the pulsator disk are two-segment arcs, centers of the arcs are respectively located on both sides of the stirring blades.

Further, a center angle between two ends of the stirring blades is in a range from 15 ° to 90 °, preferably the center angle between the two ends of the stirring blades is in range from 30 ° to 60 °.

Further, a plurality of decorative areas is arranged on the surface of the pulsator disk between the two stirring blades, and the decorative area is provided with water permeable holes, the decorative area is shallow grooves with different size and water-trail-shaped, a depth is in a range from 1 to 5mm, the shallow groove is provided with at least one water permeable hole.

The technical proposal of the present disclosure brings the following beneficial effects:
1. In the disclosure, the pulsator disk of the pulsator adopts a disk-like structure, and the laundry need only be soaked during the washing process. Compared with the conventional basin-type structure, the disclosure can save a large amount of washing water.
2. The new pulsator structure in the disclosure can greatly increase the number of times of the laundry to be overturned in washing, and the laundry on the bottom can be flipped from the center upwards and then flipped downdards to the outside, so that the laundry can be fully overturned. In this way, the cycle of continunous overturn can improve the cleaning effect and washing uniformity, reduce the winding between the laundry.
3. In the present disclosure, the pulsator has a twisted stirring blade structure. When the pulsator is rotated in the forward and reverse directions, a certain force can be exerted on the laundry, thereby causing the laundry to form a circulating overturning path. Especially reducing the water can increase the friction between pulsator and laundry, and the same concentration of detergent solution needs less detergent. It can save water, meanwhile the amount of detergent is saved relatively to reduce the pollution of the drainage. Each washing can save about 20% -40% of the water needed.
4. In the present disclosure, the relative reciprocating rotation amplitude of the pulsator and the inner tub is small, the laundry is not easy to be winded after washing, and the laundry is evenly distributed in the tub after washing to be favorable for the subsequent dewatering stationarity.
5. In the present disclosure, a plurality of ribs are provided on the inner wall of the washing tub and a plurality of bumps are provided on the tub bottom outer ring to facilitate the relative movement of the laundry in the washing tub relative to the pulsator, promote the laundry circulation to overturn.

Specific embodiments of the present disclosure are further described below in detail with reference to the accompanying drawings.

### BRIEF DESCRIPTION OF THE DRAWINGS

Fig. 1 is a schematic diagram of an inner tub and a pulsator of a washing machine of the present disclosure.
Fig. 2 is a top view of the pulsator of the present disclosure.

Wherein: 1. pulsator, 2. pulsator disk, 3. stirring blade, 4. tub bottom outer ring, 5. pulsator center, 6. decorative areas, 7. water permeable holes, 8. bumps, 9. strip-shaped ribs, 10. inner wall of washing tub, 31. first segment rib, 32. second segment rib.

### DETAILED DESCRIPTION OF THE INVENTION

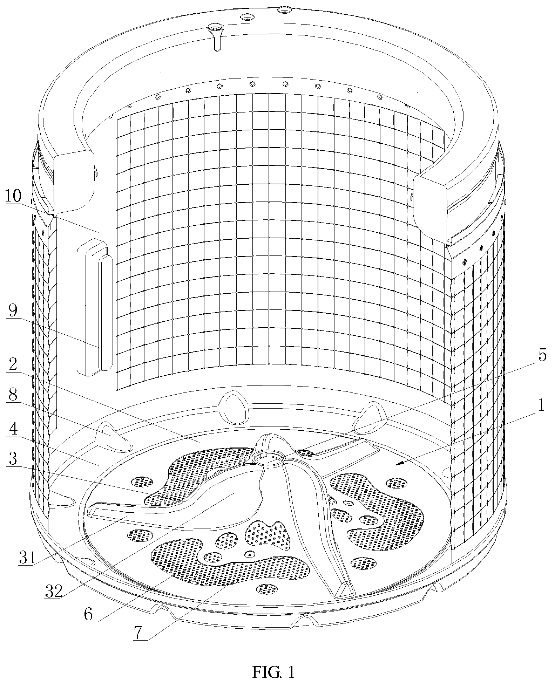

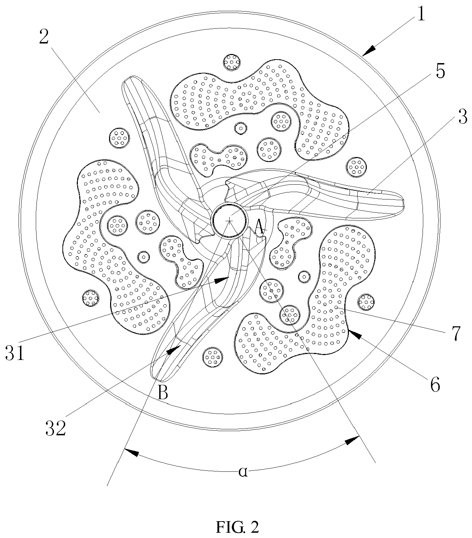

The washing machine of the present disclosure comprises a washing tub, a rotatable pulsator and a motor, the motor drives the pulsator to rotate forwardly and reversely during washing. As shown in Fig.1 and Fig. 2, the pulsator 1 comprises pulsator disk 2 and a plurality of stirring blades 3 arranged on a surface of the pulsator disk. The present embodiment employs three stirring blades, and four or five may be used. The pulsator disk 2 is a disc-like structure having a central bulge. Compared with the conventional basin-type structure, the present invention can save a large amount of washing water. All the stirring blades 3 extend from the center of the pulsator disk 5 toward the edge, and the stirring blades 3 are mainly composed of at least two segment ribs which are inclined toward both sides of the extension direction of the stirring blades to form a twisted stirring blade structure.

Further, the stirring blades 3 in an extension direction are straight lines or a curves. The stirring blade in the extension direction being a curve means curvatures or slopes of projections of at least two convex ribs of the stirring blade in the pulsator disk surface are different, or the stirring blade is at least composed of a combination of an arc-shaped rib and a straight line rib. So that when the pulsator is rotated in the forward and reverse directions, a certain force can be exerted on the laundry, thereby causing the laundry to form a circularly overturning path.

The washing machine of the present embodiment, comprises a washing tub and a pulsator 1 at a bottom of the washing tub. The pulsator 1 includes a pulsator disk 2 and a plurality of stirring blades 3 arranged on a surface of the pulsator disk, wherein the pulsator disk 2 is a disk-like structure with a bulge at center, and each stirring blade 3 extends from the center of the pulsator disk to an edge. An inner wall of the washing tub 10 is vertically provided with a plurality of strip-shaped ribs 9. A number of the strip-shaped ribs is in a range from 3 to 6, a plurality of strip-like ribs are uniformly arranged on the inner wall of the washing tub. A ratio of a protruding height of the strip-shaped ribs to a width of a tub bottom outer ring is in a range from 1: 2 to 1: 1, preferably 1:1.5. The strip-shaped ribs 9 can drive the laundry in the washing tub as a whole to reversely rotate relative to the pulsator 1 in a small angle. The laundries move along the height of the stirring blades toward the center of the inner tub while rotating, and at the same time, it gradually rises up to the center of the inner tub. The pulsator pushes the laundries in the center of the pulsator up through the slope of the stirring blades and a pulsator center part, and pushes the laundries at a periphery of the pulsator to the center. It achieves to wash and rinse the laundry in the tub by doing a constantly rapid floral-like overturn.

A ratio of a protruding height of the strip-shaped rib to the width of the tub bottom outer ring is in a range from 1: 2 to 1: 1, that is the protruding height of the strip-shaped rib is half of the width of the tub bottom outer ring. In this way, when the friction between laundry and the strip-shaped ribs drive the laundry to rotate reversely relative to the pulsator 1 in a small angle and rotates the angle occupied by one stirring blade, it is ensured that the laundry can reach an innermost side (the center of the inner tub) from the outermost side of the stirring blades (the outer side of the inner tub) along the ascending arc of the stirring blades, and then overturns outwards to form a floral-like state. When the inner tub continues to rotate, the next overturning cycle is entered. When the ratio of 1: 1.5, the effect is the best.

The strip-shaped rib comprises a first rib with strip-shaped, one side of the first rib is mounted on a side wall of the washing tub, and a second rib has a shape which is formed by extending outside in an arc from a center portion of a side of the first rib opposite to the side mounted on the side of the washing tub first close to a center and perpendicular to the side, then extending outside in an arc far away from a center and perpendicular to the side, wherein the center portion is a certain distance from the edge. The strip-shaped ribs of this shape are able to have a contact with the laundry to get a better friction. The arc-shaped curved surface of the second rib edge can accumulate a certain amount of washing water. When the strip-shaped rib is able to contact the laundry to rub, the washing water flows to the laundry and has a certain impact on the laundry and improves the cleaning rate of the washing.

As shown in Fig. 1, the washing machine of the present disclosure, comprises a washing tub and a pulsator 1 at a bottom of the washing tub, the pulsator 1 includes a pulsator disk 2 and a plurality of stirring blades 3 arranged on a surface of the pulsator disk, wherein the pulsator disk 2 is a disk-like structure with a bulge at center and each stirring blade 3 extends from the center of the pulsator disk to an edge. An inner wall of the washing tub 10 is vertically provided with a plurality of strip-shaped ribs 9. A number of the strip-shaped ribs is in a range from 3 to 6, a plurality of strip-like ribs are uniformly arranged on the inner wall of the washing tub. A ratio of a protruding height of the strip-shaped rib to the width of the tub bottom outer ring is in a range from 1: 2 to 1: 1, preferably 1:1.5.

The edge of the pulsator 1 is a certain distance from a bottom edge of the inner wall 10 of the washing tub, and a tub bottom outer ring 4 is arranged between the outside edge of the pulsator and the bottom edge of the inner wall 10 of the washing tub. A ratio of the width of the tub bottom outer ring and a radius of the pulsator is in a range from 1: 5 to 1: 3, preferably 1:4.

A junction of the tub bottom outer ring 4 and the inner wall 10 of the washing tub is circumferentially provided with a plurality of bumps 8 projecting from the tub bottom outer ring 4 and the inner wall 10 of the washing tub. A number of the bumps is in a range from 3 to 15, preferably 6 to 12, a ratio of a height of the bump to a height of the pulsator is in a range from 1: 3 to 1: 2, preferably 1:2.4.

A plurality of bumps 8 can drive the laundry at the corners of the tub bottom and the tub wall to rotate, and prevent the laundry from stacking at a corner of the tub bottom and the tub wall that can't be washed. A plurality of bumps 8 can drive the laundry in the washing tub as a whole to reversely rotate relative to the pulsator 1 in a small angle. The laundries move along the height of the stirring blades toward the center of the inner tub while rotating, and at the same time, it gradually rises up to the center of the inner tub along the stirring blades, and then overturns outwards to form a floral-like state. When the inner tub continues to rotate, the next overturning cycle is entered. When the ratio of a height of the bump to a height of the pulsator is 1: 2.4, the effect is the best.

The strip-shaped ribs 9 on the inner wall of the washing tub 10 and the bumps 8 on the tub bottom outer ring 4 can drive the laundry in the washing tub as a whole to reversely rotate relative to the pulsator 1 in a small angle. The pulsator 1 pushes the laundries in the center of the pulsator up through the slope of the stirring blades 3 and a pulsator center part, and pushes the laundries at a periphery of the pulsator 1 to the center. It achieves the laundry in the tub doing a constantly rapid floral-like overturn to wash or rinse. It can effectively improve the cleaning effect and washing uniformity.

As shown in Fig. 1 and Fig. 2, the stirring blades 3 of the present disclosure comprise a first segment rib 31 close to the pulsator center 5 and a second segment rib 32 close to the pulsator edge. The first segment rib 31 and the second segment rib 32 are respectively inclined toward the pulsator disk surface on different sides. The angle of inclination of the first segment rib 31 with respect to a vertical plane is in a range from 5 to 10 °. The vertical plane is a plane perpendicular to the surface of the pulsator disk where the stirring blades intersect the surface of the pulsator disk. The inclination direction is clockwise rotation direction of the pulsator. The angle of inclination of the second segment rib 32 with respect to the vertical plane is in a range from 10 to 15 °, the inclination direction is counterclockwise rotation direction of the pulsator (see Fig. 2). Both sides of the surface of the stirring blades 3 smoothly transit with the surface of the pulsator disk. Projections of the first segment rib 31 and the second segment rib 32 on the surface of the pulsator disk are two arcs, centers of the arcs are respectively located on both sides of the stirring blades 3. The first segment rib 31 and the second segment rib 32 are smoothly transitioned. An angle α between two ends A, B of the stirring blades 3 is in a range from 45 ° to 60 °.

As shown in Fig. 1, a height of an upper surface of the stirring blade 3 that extends from the center 5 of the pulsator disk to the edge changes as: ascending from the center of the pulsator disk to the highest position and then descending to, form an inclined ramp transition with the edge of the pulsator disk. A plurality of decorative areas 6 are arranged on the surface of the pulsator disk between the two stirring blades 3, and the decorative area is provided with water permeable holes 7. The decorative area is shallow grooves with different size and water-trail-shaped, a depth is 2 mm, and the shallow groove is evenly provided a number of water permeable holes. The pulsator structure can greatly increase the number of times of the laundry to be overturned up and down in the washing, and the laundry at the bottom can be flipped from the center upwards and then to flipped down to the outside, so that the laundry can be fully overturned. In this way, the cycle of continuous overturn can improve the cleaning effect and washing uniformity, reduce the winding between the laundry.

Further, embodiments of the washing method are described.

The washing method of the washing machine of the present disclosure comprises, during washing process, loading laundry into the washing tub, detecting loads, flooding in water to a water level corresponding to the loads. An amount of water is less to make a weight of the wet laundry fall on the pulsator. The laundry after washing is not easy to wind, and the laundry after washing in the tub is evenly distributed to facilitate the subsequent smoothness of dehydration. Then the laundries in the washing tub as a whole are driven through a plurality of strip-shaped ribs on the inner wall of the washing tub and a plurality of bumps on the tub bottom outer ring to rotate reversely relative to the pulsator in a small angle. The pulsator pushes the laundries in the center of the pulsator up through the slope of the stirring blades and a pulsator center part, and pushes the laundries on the bottom and at a periphery of the pulsator to the center. It achieves the laundry in the tub doing a constantly rapid floral-like overturn from the center to the periphery, controlling the pulsator to rotate as a fixed rotation stop ratio to wash or using different rotation stop ratios corresponding to different load rates to wash.

Reducing the washing water can increase the friction between pulsator and laundry, the same concentration of detergent solution needs less detergent. It can save water, meanwhile the amount of detergent is saved relatively to reduce the pollution of the drainage. Each washing can save about 20% -40% of the water needed. Reducing the washing water level, the laundry is not easy to wind after washing, and laundry after washing in the tub is evenly distributed to facilitate the subsequent smoothness of dehydration.

The fixed rotation stop ratio is: rotating for 0.5s∼2.4s, stop for 0s∼1.8s, the time of rotating includes the time of forward and reverse rotating, the time of stop including forward and reverse stop.

The frequency conversion rotation stop ratio corresponding to different loads is: rotating for 0.7s, stop for 0.1s, the time of rotating includes the time of forward and reverse rotating, the time of stop including forward and reverse stop. The load weight is different and the frequency is different. See the table below:

| Load weight kg | Frequency Hz |
|---|---|
| 2 | 25 |
| 3 | 28 |
| 4 | 30 |
| 5 | 33 |
| 6 | 35 |
| 7 | 40 |

As washing machine of the present disclosure an automatic washing machine and a twin-tub washing machine are used. During the washing process, the laundry is loaded into the washing tub and detecting the load, water is flooded in to a water level corresponding to the load, wherein the water level is lower than or equal to the load height, and the weight of wet laundries falls on the pulsator. During the washing process, by controlling the rotation stop ratio of the pulsator to produce different water flows, a variety of water flow are combined to circulate in single order or multiple alternations to break the load balance and make laundries scattered, evenly flip washing, and maintain load balancing overturn.

Further, by controlling the rotation stop ratio of the pulsator, three types of water flow are generated during the washing process: stirring water flow, strengthening water flow and balancing water flow. First washing proceeds with the stirring water flow to completely wet laundries, and evenly overturn to wash. After washing with the stirring water flow for a while, washing proceeds with the strengthening water flow to make laundries scattered and fully overturned so that laundries are fully washed. At last it is achieved to maintain load to overturn circularly in a balanced manner with the balancing water flow. The washing process is controlled to circulate the stirring water flow, the strengthening water flow and the balancing water flow in single order or multiple alternations

The rotation stop ratio of the pulsator corresponding to the stirring water flow and the rotation stop ratio of the pulsator corresponding to the balancing water flow may be the same or different in the present disclosure. The operation time of the stirring water flow and the operation time of the balancing water flow may be the same or different. When the rotation stop ratio of the pulsator corresponding to the stirring water flow and the rotation stop ratio of the pulsator corresponding to the balancing water flow are the same, the purpose of the balancing water flow is to maintain the load to overturn in a balance, not to break the load balance, as a reason, the stirring water flow breaks the load balance to make laundries scattered and then the strengthening water flow makes laundries overturned so that laundries are evenly distributed and start to wash and overturn. Therefore, when the rotation stop ratio of the pulsator corresponding to the stirring water flow and the rotation stop ratio of the pulsator corresponding to the balancing water flow are the same, in fact two water flows have the same mode of operation but with different functions. After maintaining balance washing and overturning for a certain time, the washing process is completed. Or the washing process is not completed and further washing is needed, there is a tendency that laundries are entangled at this situation. In order to have a better evenly washing and avoid the potential entanglement, a circulation washing mode comprising the stirring water flow, the strengthening water flow and the balancing water flow is adopted. In the above circulation washing by alternating water flows, each cycle when the balancing water flow and stirring water flow are in convergence, the rotation stop ratios of the pulsator corresponding to the two water flows are combined into one driving mode, driving time is the sum of the operation times of the two water flows.

After washing, the drive motor rotates and stops to drive dehydration and draining for a set time, the spray rinsing is carried out. At this time, the washing machine does not drain and the driving motor operates intermittently to rotate and stop.

During the draining process in rinsing, the drive motor operates intermittently to rotate and stop for the dehydration at the same time. During the dehydration process, the washing machine operates dehydrating by using the non-drainage, drainage alternate way, and the drainage is braked after the end of the dehydration. Most of the water in the laundry is thrown out and drained during the rinsing and draining process. In the dehydration stage, due to lower water content in laundries, in a certain period of time, water being thrown out from laundries does not require immediate discharge. Some thrown out water is accumulated during this period of time, and then drained in the next set time period, and then not drainage, drainage, alternately conducted, at last drained in braking. The dehydration process of the drainage, non-drainage alternate can save power consumption of the drainage device. Preferably, the drive motor uses intermittent way to operate at the early stage of dehydration in the dehydration process.

Further, the water level meets that the water can wet laundries and laundries cannot float off the surface of the pulsator. The water level is below the height of laundries. During the washing process, it can increase the friction between pulsator and laundries, and facilitate the laundries being dragged to the pulsator center.

The stirring water flow, the strengthening water flow and the balancing water flow of the present disclosure are controlled by driving the pulsator to rotate at different rotation stop ratio of the pulsator, and the strength of the strengthening water flow is greater than the strength of the stirring water flow. The great strength of the strengthening water flow can increase the rotation degree of load.

The strength of the strengthening water flow is greater than the strength of the stirring water flow. When the drive unit of the washing machine is a variable frequency direct drive motor, the intensity of the stirring water flow is adjusted according to the load. The larger the load is, the greater the intensity of the stirring water flow.

The rotation stop ratios of the pulsator corresponding to the stirring water flow, the strengthening water flow and the balancing flow of water is adjusted according to the load, the larger the load is, the greater the rotation stop ratios of the pulsator corresponding to the stirring water flow, the strengthening water flow and the balancing flow of water are.

The washing machine sets different gears according to different ranges of the load which at least includes a first load indicating a minimum load range. In washing with the strengthening water flow corresponding to the first load, during a set working time of the strengthening water flow, the pulsator rotates in one direction according to the rotation stop ratio for a set time, then rotates in the reverse direction according to the rotation stop ratio for a set time. When washing with the stirring water flow and the balancing water flow corresponding to any load and the strengthening water flow corresponding to load other than the first load, the pulsator rotates forwardly and reversely according to the corresponding rotation stop ratio.

Specifically, when a rated load of the washing machine is M, the first load is set to be greater than 0 and less than or equal to 0.3M, the second load is set to be greater than 0.3M and less than or equal to 0.7M, and the third load to be greater than 0.7M and less than or equal to M. According to different models and different rated load, the division is also different.

For the rotation stop ratios of the pulsator corresponding to the stirring water flow, the strengthening water flow and the balancing water flow, each time a rotation time is 0.2-3.0s, and a stop time is 0-3.0s. The arbitrary time within the two ranges is combined into the rotation stop ratio corresponding to the stirring water flow, the strengthening water flow and the balancing water flow.

Specifically, for the rotation stop ratio of the pulsator corresponding to the stirring water flow and the balancing water flow, each time the rotation time is 0.2-3.0s, and the stop time is 0-3.0s. The arbitrary rotation time and stop time within the two ranges are combined into the rotation stop ratio corresponding to the stirring water flow and the balancing water flow.

The rotation stop ratio corresponding to the strengthening water flow, each time the rotation time is 0.2-3.0s, and stop time is 0-3.0s. The two arbitrary rotation time and stop time within the two ranges are combined into the rotation stop ratio corresponding to the strengthening water flow.

The above description is only preferred embodiments of the disclosure. It should be noted that without departing from the principle of the present disclosure, various variations and improvements made to the technical solutions of the present disclosure by persons skilled in the art all belong to the protection scope of the present disclosure.

## Claims

1. A washing machine comprising,
a washing tub and a pulsator (1) at a bottom of the washing tub,
the pulsator (1) including a pulsator disk (2) and a plurality of stirring blades (3) being arranged on a surface of the pulsator disk (2),
wherein the pulsator disk (2) is a disk-like structure with a bulge at center (5),
each stirring blade (3) extends from the center (5) of the pulsator disk (2) to an edge, and a plurality of strip-shaped ribs (9) are vertically arranged on an inner wall of the washing tub (10), wherein there is a distance between an outside edge of the pulsator (1) and a bottom edge of the inner wall of the washing tub,
a tub bottom outer ring (4) is arranged between the outside edge of the pulsator (1) and the bottom edge of the inner wall of the washing tub (10), and
a junction of the tub bottom outer ring (4) and the inner wall of the washing tub (10) is circumferentially provided with a plurality of bumps (8) projecting from the tub bottom outer ring (4) and the inner wall of the washing tub (10), wherein
a ratio of a width of the tub bottom outer ring (4) to a radius of the pulsator (1) is in a range from 1: 5 to 1: 3,
a number of the bumps (8) is in a range from 3 to 15 and a ratio of a height of the bumps (8) to a height of the pulsator (1) is in range from 1: 3 to 1: 2, wherein further
a number of the strip-shaped ribs (9) is in a range from 3 to 6, a plurality of strip-like ribs are uniformly provided on the inner wall of the washing tub (10),
and a ratio of a protruding height of the strip-shaped ribs (9) to a width of the tub bottom outer ring (4) is in a range from 1: 2 to 1: 1, wherein further
a height of an upper surface of the stirring blades (3) that extends from the center (5) to the edge of the pulsator disk (2) changes as: ascending from the center (5) of the pulsator disk (2) to a highest position and then descending, to form an inclined ramp transition with the edge of the pulsator disk (2), wherein further the stirring blades (3) comprise at least two ribs which are respectively inclined toward both sides in an extension direction of the stirring blades (3) to form a twisted stirring blade structure,
the stirring blades (3) in the extension direction is a straight line or a curve,
the stirring blades (3) in the extension direction being a curve means that curvatures or slopes of projections of at least two ribs of the stirring blades (3) in the surface of the pulsator disk (2) are different, or the stirring blades (3) are at least composed of a combination of an arc-shaped rib and a straight line rib, wherein further the stirring blades (3) comprise a first segment rib (31) adjacent the center (5) of the pulsator disk (2) and a second segment rib (32) adjacent the edge of the pulsator disk (2),
the first segment rib (31) and second segment rib (32) are respectively inclined to surfaces of the pulsator disk (2) on different sides in the extension direction of the stirring blades (3),
an inclination of the first segment rib (31) and second segment rib (32) to a vertical plane of the surface of the pulsator disk (2) with respect to a line where the stirring blades (3) and the surface of the pulsator disk (2) surface intersect is less than or equal to 35 °,
two side surfaces of the stirring blades (3) and the surface of the pulsator disk (2) are smooth transition,
wherein further a center angle (α) between two ends (A, B) of the stirring blades (3) is in a range from 15 ° to 90 °, wherein further a plurality of decorative areas (6) are arranged on the surface of the pulsator disk (2) between the two stirring blades (3), and the decorative areas (6) are provided with water permeable holes (7),
the decorative areas (6) are shallow grooves with different size and water-trail-shaped, a depth is in a range from 1 to 5mm, the shallow grooves are provided with at least one water permeable hole (7), wherein during washing process, laundry is loaded into the washing tub, water is flooded in enough to wet laundry, so that a weight of the wet laundry falls on the pulsator (1), the pulsator rotates reversely with respect to the washing tub, the laundries in the washing tub as a whole is driven to rotate reversely by a plurality of strip-shaped ribs (9) on the inner wall of the washing tub (10) and the plurality of bumps (8) on the tub bottom outer ring (4) relative to the pulsator (1) in a small angle, the pulsator (1) pushes the laundry on the bottom and at a periphery of the pulsator (1) to the center through the slope of the stirring blades and the pulsator center part (5), and pushes the laundry in the center (5) of the pulsator (1) up, it achieves the laundry in the tub doing a constantly rapid floral-like overturn from the center to the periphery, and controlling the pulsator (1) to rotate as a fixed rotation stop ratio to wash or using different rotation stop ratios corresponding to different load rates to wash.

2. A washing method of a washing machine, the washing machine comprising:
a washing tub and a pulsator (1) at a bottom of the washing tub,
the pulsator (1) including a pulsator disk (2) and a plurality of stirring blades (3) being arranged on a surface of the pulsator disk (2),
wherein the pulsator disk (2) is a disk-like structure with a bulge at center (5),
each stirring blade (3) extends from the center (5) of the pulsator disk (2) to an edge,
and a plurality of strip-shaped ribs (9) are vertically arranged on an inner wall of the washing tub (10), wherein there is a distance between an outside edge of the pulsator (1) and a bottom edge of the inner wall of the washing tub,
a tub bottom outer ring (4) is arranged between the outside edge of the pulsator (1) and the bottom edge of the inner wall of the washing tub (10), and a junction of the tub bottom outer ring (4) and the inner wall of the washing tub (10) is circumferentially provided with a plurality of bumps (8) projecting from the tub bottom outer ring (4) and the inner wall of the washing tub (10), wherein
during washing process, laundry is loaded into the washing tub, water is flooded in enough to wet laundry, so that a weight of the wet laundry falls on the pulsator (1),
the pulsator rotates reversely with respect to the washing tub, the laundries in the washing tub as a whole is driven to rotate reversely by the plurality of strip-shaped ribs (9) on the inner wall of the washing tub (10) and the plurality of bumps (8) on the tub bottom outer ring (4) relative to the pulsator (1) in a small angle,
the pulsator (1) pushes the laundry on the bottom and at a periphery of the pulsator (1) to the center through the slope of the stirring blades and the pulsator center part (5), and pushes the laundry in the center (5) of the pulsator (1) up, it achieves the laundry in the tub doing a constantly rapid floral-like overturn from the center to the periphery, and controlling the pulsator (1) to rotate as a fixed rotation stop ratio to wash or using different rotation stop ratios corresponding to different load rates to wash.

3. Washing method of a washing machine according to claim 2, wherein a ratio of a width of the tub bottom outer ring (4) to a radius of the pulsator (1) is in a range from 1: 5 to 1: 3, a number of the bumps (8) is in a range from 3 to 15 and a ratio of a height of the bumps (8) to a height of the pulsator (1) is in range from 1: 3 to 1: 2.

4. Washing method of a washing machine according to claim 2, wherein a number of the strip-shaped ribs (9) is in a range from 3 to 6, a plurality of strip-like ribs are uniformly provided on the inner wall of the washing tub (10), and a ratio of a protruding height of the strip-shaped ribs (9) to a width of the tub bottom outer ring (4) is in a range from 1: 2 to 1: 1.

5. Washing method of a washing machine according to claims 2 to 4, wherein a height of an upper surface of the stirring blades (3) that extends from the center (5) to the edge of the pulsator disk (2) changes as: ascending from the center (5) of the pulsator disk (2) to a highest position and then descending, to form an inclined ramp transition with the edge of the pulsator disk (2), wherein further.

6. Washing method of a washing machine according to claims 2 to 4, wherein the stirring blades (3) comprise at least two ribs which are respectively inclined toward both sides in an extension direction of the stirring blades (3) to form a twisted stirring blade structure,
the stirring blades (3) in the extension direction is a straight line or a curve,
the stirring blades (3) in the extension direction being a curve means that curvatures or slopes of projections of at least two ribs of the stirring blades (3) in the surface of the pulsator disk (2) are different, or the stirring blades (3) are at least composed of a combination of an arc-shaped rib and a straight line rib.

7. Washing method of a washing machine according to claim 6, wherein the stirring blades (3) comprise a first segment rib (31) adjacent the center (5) of the pulsator disk (2) and a second segment rib (32) adjacent the edge of the pulsator disk (2),
the first segment rib (31) and second segment rib (32) are respectively inclined to surfaces of the pulsator disk (2) on different sides in the extension direction of the stirring blades (3),
an inclination of the first segment rib (31) and second segment rib (32) to a vertical plane of the surface of the pulsator disk (2) with respect to a line where the stirring blades (3) and the surface of the pulsator disk (2) surface intersect is less than or equal to 35 °,
two side surfaces of the stirring blades (3) and the surface of the pulsator disk (2) are smooth transition.

8. Washing method of a washing machine according to claims 2 to 4, wherein a center angle (α) between two ends (A, B) of the stirring blades (3) is in a range from 15 ° to 90 °, 9.

9. Washing method of a washing machine according to claim 2, wherein a plurality of decorative areas (6) are arranged on the surface of the pulsator disk (2) between the two stirring blades (3), and the decorative areas (6) are provided with water permeable holes (7),
the decorative areas (6) are shallow grooves with different size and water-trail-shaped, a depth is in a range from 1 to 5mm, the shallow grooves are provided with at least one water permeable hole (7).

## Patentansprüche

1. Waschmaschine, umfassend:
einen Waschbottich und ein Wellenrad (1) an einem Boden des Waschbottichs,
wobei das Wellenrad (1) eine Wellenradscheibe (2) und eine Mehrzahl von Rührflügeln (3) aufweist, die auf einer Oberfläche der Wellenradscheibe (2) angeordnet ist,
wobei die Wellenradscheibe (2) ein scheibenartiges Gebilde mit einer Vorwölbung in der Mitte (5) ist,
jeder Rührflügel (3) von der Mitte (5) der Wellenradscheibe (2) aus zu einem Rand verläuft,
und eine Mehrzahl streifenförmiger Rippen (9) senkrecht an einer Innenwand des Waschbottichs (10) angeordnet ist, wobei zwischen einem Außenrand des Wellenrads (1) und einem unteren Rand der Innenwand des Waschbottichs ein Abstand gegeben ist,
ein Bottichboden-Außenring (4) zwischen dem Außenrand des Wellenrads (1) und dem unteren Rand der Innenwand des Waschbottichs (10) angeordnet ist, und
eine Verbindungsstelle des Bottichboden-Außenrings (4) und der Innenwand des Waschbottichs (10) in Umfangsrichtung mit einer Mehrzahl von Erhebungen (8) versehen ist, die vom Bottichboden-Außenring (4) und der Innenwand des Waschbottichs (10) aus vorragen,
wobei
ein Verhältnis einer Breite des Bottichboden-Außenrings (4) zu einem Radius des Wellenrads (1) in einem Bereich zwischen 1:5 und 1:3 liegt,
die Anzahl der Erhebungen (8) in einem Bereich von 3 bis 15 liegt und ein Verhältnis einer Höhe der Erhebungen (8) zu einer Höhe des Wellenrads (1) im Bereich zwischen 1:3 und 1:2 liegt, wobei ferner
die Anzahl der streifenförmigen Rippen (9) in einem Bereich zwischen 3 und 6 liegt, eine Mehrzahl von streifenartigen Rippen gleichmäßig an der Innenwand des Waschbottichs (10) angeordnet ist,
und ein Verhältnis einer vorragenden Höhe der streifenförmigen Rippen (9) zu einer Breite des Bottichboden-Außenrings (4) in einem Bereich zwischen 1:2 und 1:1 liegt, wobei ferner
sich eine Höhe einer oberen Fläche der Rührflügel (3), die von der Mitte (5) aus zum Rand der Wellenradscheibe (2) verläuft, folgendermaßen ändert: von der Mitte (5) der Wellenradscheibe (2) aus ansteigend bis zu einer höchsten Position und anschließend absteigend zur Ausbildung eines geneigten Schrägenübergangs zum Rand der Wellenradscheibe (2), wobei ferner die Rührflügel (3) mindestens zwei Rippen umfassen, die jeweils zu beiden Seiten in einer Verlaufsrichtung der Rührflügel (3) hin geneigt sind und so eine verdrehte Rührflügelkonstruktion bilden,
die Rührflügel (3) in der Verlaufsrichtung eine gerade Linie oder eine Kurve sind,
dass die Rührflügel (3) in der Verlaufsrichtung eine Kurve sind, bedeutet, dass sich Krümmungen oder Steigungen von Projektionen von mindestens zwei Rippen der Rührflügel (3) in der Oberfläche der Wellenradscheibe (2) unterscheiden oder die Rührflügel (3) zumindest aus einer Kombination aus einer bogenförmigen Rippe und einer geradlinigen Rippe bestehen, wobei die Rührflügel (3) ferner eine erste Segmentrippe (31) angrenzend an die Mitte (5) der Wellenradscheibe (2) und eine zweite Segmentrippe (32) angrenzend an den Rand der Wellenradscheibe (2) umfassen,
die erste Segmentrippe (31) und die zweite Segmentrippe (32) jeweils zu Flächen der Wellenradscheibe (2) auf unterschiedlichen Seiten in der Verlaufsrichtung der Rührflügel (3) geneigt sind,
eine Neigung der ersten Segmentrippe (31) und der zweiten Segmentrippe (32) zu einer senkrechten Ebene der Oberfläche der Wellenradscheibe (2) bezogen auf eine Linie, an der sich die Rührflügel (3) und die Fläche der Oberfläche der Wellenradscheibe (2) schneiden, kleiner gleich 35° ist,
zwei Seitenflächen der Rührflügel (3) und die Oberfläche der Wellenradscheibe (2) glatt ineinander übergehen,
wobei ferner ein Mittelpunktswinkel (α) zwischen zwei Enden (A, B) der Rührflügel (3) in einem Bereich zwischen 15 ° und 90 ° liegt, wobei ferner eine Mehrzahl von Zierbereichen (6) auf der Oberfläche der Wellenradscheibe (2) zwischen den beiden Rührflügeln (3) angeordnet ist und die Zierbereiche (6) mit wasserdurchlässigen Löchern (7) versehen sind,
die Zierbereiche (6) flache Aussparungen unterschiedlicher Größe und in Form eines Wasserlaufs sind, eine Tiefe im Bereich zwischen 1 und 5 mm liegt, die flachen Aussparungen mit mindestens einem wasserdurchlässigen Loch (7) versehen sind, wobei während des Waschvorgangs der Waschbottich mit Wäsche befüllt wird, ausreichend Wasser einlaufen gelassen wird, dass die Wäsche nass wird, damit das Gewicht der nassen Wäsche auf das Wellenrad (1) fällt, sich das Wellenrad bezogen auf den Waschbottich umgekehrt dreht, die Wäschestücke in dem Waschbottich als Ganzes so bewegt werden, dass sie sich durch eine Mehrzahl von streifenförmigen Rippen (9) an der Innenwand des Waschbottichs (10) und die Mehrzahl von Erhebungen (8) am Bottichboden-Außenring (4) bezogen auf das Wellenrad (1) unter einem kleinen Winkel umgekehrt drehen, das Wellenrad (1) die Wäsche am Boden und an einem Rand des Wellenrads (1) durch die Schräge der Rührflügel und des Wellenradmittelteils (5) in die Mitte drückt und die Wäsche in der Mitte (5) des Wellenrads (1) nach oben drückt, es bewirkt, dass die Wäsche in dem Bottich konstant schnell blumenartig von der Mitte zum Rand hin umgewälzt wird, und Steuern des Wellenrads (1) derart, dass es sich zum Waschen als einem festen Drehung-Halt-Verhältnis oder zum Waschen unter Verwendung unterschiedlicher Drehung-Halt-Verhältnisse dreht, die unterschiedlichen Beladungsraten entsprechen.

2. Waschverfahren einer Waschmaschine, wobei die Waschmaschine Folgendes umfasst:
einen Waschbottich und ein Wellenrad (1) an einem Boden des Waschbottichs,
wobei das Wellenrad (1) eine Wellenradscheibe (2) und eine Mehrzahl von Rührflügeln (3) aufweist, die auf einer Oberfläche der Wellenradscheibe (2) angeordnet ist,
wobei die Wellenradscheibe (2) ein scheibenartiges Gebilde mit einer Vorwölbung in der Mitte (5) ist,
jeder Rührflügel (3) von der Mitte (5) der Wellenradscheibe (2) aus zu einem Rand verläuft,
und eine Mehrzahl streifenförmiger Rippen (9) senkrecht an einer Innenwand des Waschbottichs (10) angeordnet ist, wobei zwischen einem Außenrand des Wellenrads (1) und einem unteren Rand der Innenwand des Waschbottichs ein Abstand gegeben ist,
ein Bottichboden-Außenring (4) zwischen dem Außenrand des Wellenrads (1) und dem unteren Rand der Innenwand des Waschbottichs (10) angeordnet ist, und
eine Verbindungsstelle des Bottichboden-Außenrings (4) und der Innenwand des Waschbottichs (10) in Umfangsrichtung mit einer Mehrzahl von Erhebungen (8) versehen ist, die vom Bottichboden-Außenring (4) und der Innenwand des Waschbottichs (10) aus vorragen,
wobei
während des Waschvorgangs der Waschbottich mit Wäsche befüllt wird, ausreichend Wasser einlaufen gelassen wird, dass die Wäsche nass wird, sodass das Gewicht der nassen Wäsche auf das Wellenrad (1) fällt,
sich das Wellenrad bezogen auf den Waschbottich umgekehrt dreht, die Wäschestücke in dem Waschbottich so bewegt werden, dass sie sich durch die Mehrzahl von streifenförmigen Rippen (9) an der Innenwand des Waschbottichs (10) und die Mehrzahl von Erhebungen (8) am Bottichboden-Außenring (4) bezogen auf das Wellenrad (1) unter einem kleinen Winkel umgekehrt drehen,
das Wellenrad (1) die Wäsche am Boden und an einem Rand des Wellenrads (1) durch die Schräge der Rührflügel und des Wellenradmittelteils (5) in die Mitte drückt und die Wäsche in der Mitte (5) des Wellenrads (1) nach oben drückt, es bewirkt, dass die Wäsche in dem Bottich konstant schnell blumenartig von der Mitte zum Rand umgewälzt wird, und Steuern des Wellenrads (1) derart, dass es sich zum Waschen als einem festen Drehung-Halt-Verhältnis oder zum Waschen unter Verwendung unterschiedlicher Drehung-Halt-Verhältnisse, die unterschiedlichen Beladungsraten entsprechen.

3. Waschverfahren einer Waschmaschine nach Anspruch 2, wobei ein Verhältnis einer Breite des Bottichboden-Außenrings (4) zu einem Radius des Wellenrads (1) in einem Bereich zwischen 1:5 und 1:3 liegt, die Anzahl der Erhebungen (8) in einem Bereich von 3 bis 15 liegt und ein Verhältnis einer Höhe der Erhebungen (8) zu einer Höhe des Wellenrads (1) im Bereich zwischen 1:3 und 1:2 liegt.

4. Waschverfahren einer Waschmaschine nach Anspruch 2, wobei die Anzahl der streifenförmigen Rippen (9) in einem Bereich zwischen 3 und 6 liegt, eine Mehrzahl von streifenartigen Rippen gleichmäßig an der Innenwand des Waschbottichs (10) angeordnet ist, und ein Verhältnis einer vorragenden Höhe der streifenförmigen Rippen (9) zu einer Breite des Bottichboden-Außenrings (4) in einem Bereich zwischen 1:2 und 1:1 liegt.

5. Waschverfahren einer Waschmaschine nach Anspruch 2 bis 4, wobei sich eine Höhe einer oberen Fläche der Rührflügel (3), die von der Mitte (5) aus zum Rand der Wellenradscheibe (2) verläuft, folgendermaßen ändert: von der Mitte (5) der Wellenradscheibe (2) aus ansteigend bis zu einer höchsten Position und anschließend absteigend zur Ausbildung eines geneigten Schrägenübergangs zum Rand der Wellenradscheibe (2), wobei ferner.

6. Waschverfahren einer Waschmaschine nach Anspruch 2 bis 4, wobei die Rührflügel (3) mindestens zwei Rippen umfassen, die jeweils in Richtung von beiden Seiten in einer Verlaufsrichtung der Rührflügel (3) geneigt sind und so eine verdrehte Rührflügelkonstruktion bilden,
die Rührflügel (3) in der Verlaufsrichtung eine gerade Linie oder eine Kurve sind,
dass die Rührflügel (3) in der Verlaufsrichtung eine Kurve sind, bedeutet, dass sich Krümmungen oder Steigungen von Projektionen von mindestens zwei Rippen der Rührflügel (3) in der Oberfläche der Wellenradscheibe (2) unterscheiden oder die Rührflügel (3) zumindest aus einer Kombination aus einer bogenförmigen Rippe und einer geradlinigen Rippe bestehen.

7. Waschverfahren einer Waschmaschine nach Anspruch 6, wobei die Rührflügel (3) eine erste Segmentrippe (31) angrenzend an die Mitte (5) der Wellenradscheibe (2) und eine zweite Segmentrippe (32) angrenzend an den Rand der Wellenradscheibe (2) umfassen,
die erste Segmentrippe (31) und die zweite Segmentrippe (32) jeweils zu Flächen der Wellenradscheibe (2) auf unterschiedlichen Seiten in der Verlaufsrichtung der Rührflügel (3) geneigt sind,
eine Neigung der ersten Segmentrippe (31) und der zweiten Segmentrippe (32) zu einer senkrechten Ebene der Oberfläche der Wellenradscheibe (2) bezogen auf eine Linie, an der sich die Rührflügel (3) und die Fläche der Oberfläche der Wellenradscheibe (2) schneiden, kleiner gleich 35 ° ist,
zwei Seitenflächen der Rührflügel (3) und die Oberfläche der Wellenradscheibe (2) ein glatter Übergang sind.

8. Waschverfahren einer Waschmaschine nach Anspruch 2 bis 4, wobei ein Mittelpunktswinkel (α) zwischen zwei Enden (A, B) der Rührflügel (3) in einem Bereich zwischen 15 ° und 90 °, 9 liegt.

9. Waschverfahren einer Waschmaschine nach Anspruch 2, wobei eine Mehrzahl von Zierbereichen (6) auf der Oberfläche der Wellenradscheibe (2) zwischen den beiden Rührflügeln (3) angeordnet ist und die Zierbereiche (6) mit wasserdurchlässigen Löchern (7) versehen sind,
die Zierbereiche (6) flache Aussparungen unterschiedlicher Größe und in Form eines Wasserlaufs sind, eine Tiefe im Bereich zwischen 1 und 5 mm liegt, die flachen Aussparungen mit mindestens einem wasserdurchlässigen Loch (7) versehen sind.

## Revendications

1. Machine à laver comprenant :
une cuve de lavage et un pulsateur (1) au fond de cuve de lavage,
le pulsateur (1) comprenant un disque de pulsateur (2) et une pluralité de pales d'agitation (3) étant disposé sur une surface du disque de pulsateur (2),
le disque de pulsateur (2) étant une structure en forme de disque doté d'un renflement à un centre (5),
la pale d'agitation (3) respective s'étendant du centre (5) du disque de pulsateur (2) jusqu'à un bord,
et une pluralité de nervures (9) en forme de bande étant disposées verticalement sur une paroi interne de la cuve de lavage (10), une distance étant présente entre un bord extérieur du pulsateur (1) et un bord inférieur de la paroi interne de la cuve de lavage,
un anneau extérieur (4) de fond de cuve étant disposé entre le bord extérieur du pulsateur (1) et le bord inférieur de la paroi intérieure de la cuve de lavage (10), et
une jonction de l'anneau externe (4) de fond de cuve et de la paroi interne de la cuve de lavage (10) étant pourvue de manière circonférentielle d'une pluralité de bosses (8) faisant saillie de l'anneau externe (4) de fond de cuve et de la paroi interne de la cuve de lavage (10),
le rapport de la largeur de l'anneau externe (4) de fond de cuve au rayon du pulsateur (1) étant situé dans la plage de 1:5 à 1:3,
un certain nombre de bosses (8) étant situées dans une plage de 3 à 15 et un rapport de la hauteur des bosses (8) à une hauteur du pulsateur (1) étant situé dans la plage de 1:3 à 1:2, en outre
un certain nombre de nervures (9) en forme de bande étant situées dans une plage de 3 à 6, une pluralité de nervures en forme de bande étant uniformément ménagées sur la paroi interne de la cuve de lavage (10),
et un rapport de la hauteur en saillie des nervures (9) en forme de bande à la largeur de l'anneau externe (4) de fond de cuve étant compris dans la plage de 1:2 à 1:1,
la hauteur de la surface supérieure des pales d'agitation (3), laquelle s'étend du centre (5) au bord du disque de pulsateur (2), variant comme suit: montant du centre (5) du disque de pulsateur (2) vers une position la plus haute, puis descendant, pour former une transition de rampe inclinée avec le bord du disque de pulsateur (2), les pales d'agitation (3) comprenant en outre au moins deux nervures, lesquelles sont respectivement inclinées vers les deux côtés dans la direction d'extension des pales d'agitation (3) pour former une structure de pale d'agitation torsadée,
les pales d'agitation (3), dans le sens de l'extension, étant des lignes droites ou des courbes,
les pales d'agitation (3), dans le sens de l'extension, étant des courbes, les courbures ou les pentes des saillies d'au moins deux nervures des pales d'agitation (3) de la surface du disque de pulsateur (2) étant différentes ou les pales d'agitation (3) étant au moins composés d'une combinaison d'une nervure en forme d'arc et d'une nervure de ligne droite, les pales d'agitation (3) comprenant en outre une première nervure de segment (31), adjacente au centre (5) du disque de pulsateur (2) et une deuxième nervure de segment (32), adjacente au bord du disque de pulsateur (2),
la première nervure de segment (31) et la deuxième nervure de segment (32) étant respectivement inclinées par rapport aux surfaces du disque de pulsateur (2) sur des côtés différents dans le sens de l'extension des pales d'agitation (3),
une inclinaison de la première nervure de segment (31) et de la deuxième nervure de segment (32) par rapport à un plan vertical de la surface du disque de pulsateur (2), par rapport à une ligne où les pales d'agitation (3) et la surface du disque de pulsateur (2) se croisent, étant inférieure ou égale à 35°,
les deux surfaces latérales des pales d'agitation (3) et la surface du disque de pulsateur (2) présentant une transition douce,
en outre un angle central (α) entre deux extrémités (A, B) des pales d'agitation (3) étant situé dans une plage de 15° à 90°, en outre une pluralité de zones décoratives (6) étant agencées sur la surface du disque de pulsateur (2) entre les deux pales d'agitation (3) et les zones décoratives (6) étant pourvues de trous (7) perméables à l'eau,
les zones décoratives (6) sont des rainures peu profondes de différentes tailles et en forme de sillon d'eau, une profondeur est située dans la plage de 1 à 5 mm, les rainures peu profondes sont pourvues d'au moins un trou (7) perméable à l'eau, lors du processus de lavage, le linge étant chargé dans la cuve de lavage, de l'eau étant injectée dans ladite cuve de lavage en quantité suffisante pour humidifier le linge de telle sorte que le poids du linge humide pèse sur le pulsateur (1), le pulsateur tournant en sens inverse par rapport à la cuve de lavage, tout linge dans la cuve de lavage est entraîné pour tourner en sens inverse par une pluralité de nervures (9) en forme de bande sur la paroi interne de la cuve de lavage (10) et la pluralité de bosses (8) sur l'anneau externe (4) de fond de cuve par rapport au pulsateur (1) dans un angle faible, le pulsateur (1) poussant le linge vers le bas et à la périphérie du pulsateur (1) vers le centre à travers la pente des pales d'agitation et la partie centrale du pulsateur (5), et ledit pulsateur (1) pousse le linge dans le centre (5) du pulsateur (1) vers le haut, cela permet au linge dans la cuve d'effectuer un renversement constamment rapide de type fleur du centre vers la périphérie et de commander le pulsateur (1) de tourner comme un rapport d'arrêt de rotation fixe pour laver ou en utilisant des différents rapports d'arrêt de rotation correspondant à différents taux de charge à laver.

2. Procédé de lavage d'une machine à laver, la machine à laver comprenant :
une cuve de lavage et un pulsateur (1) au fond de cuve de lavage,
le pulsateur (1) comprenant un disque de pulsateur (2) et une pluralité de pales d'agitation (3) étant disposé sur une surface du disque de pulsateur (2),
le disque de pulsateur (2) étant une structure en forme de disque doté d'un renflement à un centre (5),
la pale d'agitation (3) respective s'étendant du centre (5) du disque de pulsateur (2) jusqu'à un bord, et une pluralité de nervures (9) en forme de bande étant disposées verticalement sur une paroi interne de la cuve de lavage (10), une distance étant présente entre un bord extérieur du pulsateur (1) et un bord inférieur de la paroi intérieure de la cuve de lavage,
un anneau (4) externe de fond de cuve étant disposée entre le bord extérieur du pulsateur (1) et le bord inférieur de la paroi intérieure de la cuve de lavage (10), et une jonction de l'anneau externe (4) de fond de cuve et de la paroi interne de la cuve de lavage (10) étant pourvue de manière circonférentielle d'une pluralité de bosses (8) faisant saillie de l'anneau externe (4) de fond de cuve et de la paroi interne de la cuve de lavage (10),
lors du processus de lavage, un linge étant chargé dans la cuve de lavage, l'eau étant injectée dans ladite cuve de lavage en quantité suffisante pour humidifier le linge de telle sorte que le poids du linge humide pèse sur le pulsateur (1),
le pulsateur tournant en sens inverse par rapport à la cuve de lavage, tout linge dans la cuve de lavage est entraîné pour tourner en sens inverse par une pluralité de nervures (9) en forme de bande sur la paroi interne de la cuve de lavage (10) et la pluralité de bosses (8) sur l'anneau externe (4) de fond de cuve par rapport au pulsateur (1) dans un angle faible,
le pulsateur (1) poussant le linge vers le bas et à la périphérie du pulsateur (1) vers le centre à travers la pente des pales d'agitation et la partie centrale du pulsateur (5), et pousse le linge dans le centre (5) du pulsateur (1) vers le haut, cela permet au linge dans la cuve d'effectuer un renversement constamment rapide de type fleur du centre vers la périphérie et de commander le pulsateur (1) de tourner comme un rapport d'arrêt de rotation fixe pour laver ou en utilisant des différents rapports d'arrêt de rotation correspondant à différents taux de charge à laver.

3. Procédé de lavage d'une machine à laver selon la revendication 2, le rapport de la largeur de l'anneau externe (4) du fond de cuve au rayon du pulsateur (1) étant situé dans la plage de 1:5 à 1:3, un certain nombre de bosses (8) étant situées dans une plage de 3 à 15 et le rapport de la hauteur des bosses (8) à une hauteur du pulsateur (1) étant situé dans la plage de 1:3 à 1:2.

4. Procédé de lavage d'une machine à laver selon la revendication 2, un certain nombre de nervures (9) en forme de bande étant situées dans une plage de 3 à 6, une pluralité de nervures en forme de bande étant uniformément ménagées sur la paroi interne de la cuve de lavage (10) et le rapport d'une hauteur en saillie des nervures (9) en forme de bande à une largeur de l'anneau externe (4) du fond de cuve étant située dans la plage de 1:2 à 1:1.

5. Procédé de lavage d'une machine à laver selon les revendications 2 à 4, la hauteur de la surface supérieure des pales d'agitation (3), laquelle s'étend du centre (5) au bord du disque de pulsateur (2), variant comme suit: montant du centre (5) du disque de pulsateur (2) vers une position la plus haute, puis descendant, pour former une transition de rampe inclinée avec le bord du disque de pulsateur (2), en outre.

6. Procédé de lavage d'une machine à laver selon les revendications 2 à 4, les pales d'agitation (3) comprenant au moins deux nervures, lesquelles sont respectivement inclinées vers les deux côtés dans un sens de l'extension des pales d'agitation (3) pour former une structure torsadée de la pale d'agitation,
les pales d'agitation (3), dans le sens de l'extension, étant des lignes droites ou des courbes,
les pales d'agitation (3), dans le sens de l'extension, étant des courbures, les courbures ou les pentes des saillies d'au moins deux nervures des pales d'agitation (3) de la surface du disque de pulsateur (2) étant différentes ou les pales d'agitation (3) étant au moins composés d'une combinaison d'une nervure en forme d'arc et d'une nervure de ligne droite.

7. Procédé de lavage d'une machine à laver selon la revendication 6, les pales d'agitation (3) comprenant en outre une première nervure de segment (31), adjacente au centre (5) du disque de pulsateur (2) et une deuxième nervure de segment (32), adjacente au bord du disque de pulsateur (2),
la première nervure de segment (31) et la deuxième nervure de segment (32) étant respectivement inclinées par rapport aux surfaces du disque de pulsateur (2) sur des côtés différents dans le sens de l'extension des pales d'agitation (3),
une inclinaison de la première nervure de segment (31) et de la deuxième nervure de segment (32) par rapport à un plan vertical de la surface du disque de pulsateur (2), par rapport à une ligne où les pales d'agitation (3) et la surface du disque de pulsateur (2) se croisent, étant inférieure ou égale à 35°,
les deux surfaces latérales des pales d'agitation (3) et la surface du disque de pulsateur (2) présentant une transition douce.

8. Procédé de lavage d'une machine à laver selon les revendications 2 à 4, un angle central (α) entre deux extrémités (A, B) des pales d'agitation (3) étant situé dans une plage de 15° à 90°, 9.

9. Procédé de lavage d'une machine à laver selon la revendication 2, une pluralité de zones décoratives (6) étant agencées sur la surface du disque de pulsateur (2) entre les deux pales d'agitation (3) et les zones décoratives (6) étant pourvues de trous (7) perméables à l'eau,
les zones décoratives (6) étant des rainures peu profondes de différentes tailles et en forme de sillon d'eau, une profondeur étant située dans la plage de 1 à 5 mm, les rainures peu profondes étant pourvues d'au moins un trou (7) perméable à l'eau.
